# FASCICULE DE BREVET EUROPEEN

(11) **EP 1 302 071 B1**
(45) Date de publication et mention de la délivrance du brevet: **11.01.2012**
(21) Numéro de dépôt: 01954099.6
(22) Date de dépôt: 16.07.2001
(51) Int. Cl.: H04N 5/765

(54) **PROCEDE ET DISPOSITIF DE LECTURE DE DONNEES ENREGISTREES MPEG TRANSMISES SUR UN BUS IEEE 1394**
VERFAHREN UND ANLAGE ZUM LESEN VON ÜBER EINEN IEEE-1394-BUS ÜBERTRAGENEN AUFGENOMMENEN MPEG-DATEN
METHOD AND DEVICE FOR READING MPEG RECORDED DATA TRANSMITTED ON AN IEEE 1394 BUS

(30) Priorité: 17.07.2000 FR 0009306
(43) Date de publication de la demande: 16.04.2003
(73) Titulaire: Thomson Licensing, 92130 Issy-les-Moulineaux (FR)
(72) Inventeur: GUILLEMOT, Jean-Charles, F-35235 Thorigne-Fouillard (FR); DEFRANCE, Serge, F-35700 Rennes (FR); MARLEC, Olivier, F-35700 Rennes (FR)
(74) Mandataire: Huchet, Anne
(86) Numéro de dépôt international: PCT/FR2001/002295
(87) Numéro de publication internationale: WO 2002/007436

(56) Documents cités:
- EP-A- 0 749 244
- EP-A- 1 006 729

## Description

L'invention concerne l'enregistrement et la lecture des données enregistrées codées selon la norme MPEG 2 ou selon la norme DV, acronymes des expressions anglaises Motion Picture Expert Group et Digital Video, transmises sur un bus IEEE 1394. Il s'agit par exemple de l'enregistrement de données DSS (de l'anglais Digital Satellite System) provenant d'un récepteur satellite, de données DV provenant d'un caméscope numérique..., ces données transitant sur un bus IEEE 1394 pour leur enregistrement ou leur décodage par un décodeur numérique.

L'apparition de nouveaux équipements audiovisuels numériques tels que magnétoscope, caméscope, ordinateur multimédia...rend aujourd'hui indispensable l'utilisation d'une liaison à haute vitesse entre ces équipements. Les réseaux domotiques sont construits autour d'un bus série rapide IEEE 1394 auquel sont abonnés ces équipements.

Un bus peut comporter jusqu'à 63 participants appelés noeuds, et jusqu'à 1023 bus peuvent être implémentés dans un même système. Chaque noeud comporte trois composantes fonctionnelles principales, une couche interface physique (appelée PHYSICAL LAYER dans la littérature anglaise) qui réalise l'interfaçage avec le câble, l'arbitrage du bus et une fonction de répéteur actif, une couche contrôle de liaison (appelée LINK LAYER) qui assemble et désassemble les paquets de données et s'occupe des procédures d'échange, un contrôleur hôte qui gère les couches plus élevées du protocole de communication (appelées TRANSACTION LAYER).

Plusieurs types de données audio et vidéo, par exemple MPEG 2, DV, DSS... sont échangés sur le bus 1394, les abonnés pouvant traiter ces différents standards.

Les données de train audio et vidéo qui exigent d'être transmises en temps réel sont échangées en mode isochrone. Un bus intégrera un noeud racine (root node dans la norme), ainsi qu'un gestionnaire de ressources isochrones et un gestionnaire de bus, qui seront définis pendant la phase d'initialisation du bus. Le gestionnaire de ressources isochrones est responsable de l'allocation des ressources isochrones (en terme de bande passante) pour toute la session, sur la base de cycles élémentaires de 125 microsecondes sur le bus. Ceci ne permet pas cependant de garantir un faible niveau de gigue (jitter en anglais) tel qu'il peut être exigé lors de la transmission de données, par exemple d'un train transport TS vers un décodeur MPEG, comme rappelé ci-après.

La norme internationale ISO/IEC 13818-1 relative au codage de données audio et vidéo de type MPEG 2, pour ce qui concerne les systèmes, décrit un modèle de synchronisation pour la chaîne complète, c'est à dire au niveau du codage, transmission, décodage et affichage des images de type MPEG. La récupération de l'horloge système, au niveau du décodeur, est effectuée par exemple en verrouillant, par une boucle à verrouillage de phase, les valeurs d'horloge locale sur les valeurs d'horloge de référence transportées par le PCR d'un flux TS entrant. L'instant d'arrivée du champ PCR ne doit pas entraîner une dérive de l'horloge système telle que reproduite dans le décodeur, de plus de 30 ppm, précision imposée par la norme internationale ISO/IEC 13818-1.

Une couche audiovisuelle a été définie pour permettre au récepteur de compenser les variations de temps de transmission introduites par le bus 1394. Elle est spécifiée par la norme IEC 61883. Un en-tête de 12 octets, dans le cas des données MPEG 2, contenant un "marqueur temporel" (time stamp en anglais) est ajouté aux paquets de données, paquets constitués de 188 octets dans le cas de cette norme MPEG 2.

Avant émission sur le bus, en entrée de l'interface 1394, les paquets sont marqués ou estampillés, à partir de l'horloge des circuits 1394 dont la précision, selon la norme, est de 100 ppm. Les paquets audio vidéo sont mémorisés dans la mémoire FIFO de l'interface 1394, chaque paquet reçoit un échantillon temporel, en fait un entête, lors de son arrivée dans la mémoire. Cette mémoire acquiert un certain nombre de paquets pendant la durée de 125 microsecondes, dépendant du débit en entrée. Lorsque le signal de synchronisation de 125 microsecondes ("cycle start") est déclenché, ces paquets sont transmis sur le bus 1394, à la suite les uns des autres.

Après réception des paquets provenant du bus, en sortie de l'interface 1394, le marqueur est lu et comparé au contenu d'un compteur local pour définir quel sera l'instant de présentation du paquet. Cet échantillon temporel permet de recréer la répartition temporelle que l'on avait en entrée de la FIFO. Le compteur local est synchronisé à chaque début de cycle ("cycle start") sur l'horloge du noeud racine qui génère la période de référence de 125 microsecondes.

Dans le cas d'une liaison directe, c'est à dire d'un simple transfert par le bus 1394, l'écart entre l'instant d'estampillage et l'instant de lecture de l'étiquette est de l'ordre de la centaine de microsecondes. L'écriture ou plus précisément l'étiquetage des données ainsi que la lecture de cette étiquette sont effectuées à partir d'horloges locales différentes mais simultanément synchronisées toutes les 125 microsecondes sur l'horloge maître du noeud racine. L'écriture et la lecture étant quasi instantanées, les effets dus à la gigue ou dérive intrinsèque au mécanisme de synchronisation du bus IEEE1394 et à la précision de son système d'horloge ne se traduisent donc pas par une dérive dans la répartition des paquets dans le temps, en sortie de l'interface 1394. En conséquence, le bus 1394 ne modifie pas le débit et ce marquage temporel selon la norme IEC 61883 résout le problème de perte de la répartition temporelle des paquets MPEG 2 lors de la transmission sur le bus 1394.

Cependant, lorsqu'un stockage de masse est associé aux équipements audiovisuels, lorsque la chaîne de transmission du flux TS est "coupée", par exemple du fait d'un enregistrement des données comprimées de ce flux sur un disque dur pour une lecture ultérieure par le décodeur, ce problème spécifique de dérive subsiste lorsque les données transitent par le bus 1394.

L'utilisation de l'étiquetage relatif à la couche 1883, pour l'enregistrement sur le support, ne permet pas de résoudre le problème du fait de la précision de l'horloge de synchronisation 1394, qui est de l'ordre de 100 ppm. L'instant d'estampillage des données est différent de l'instant de lecture de ces données du disque dur. Il y a dérive sur le débit de sortie de l'interface 1394 du fait de la nouvelle répartition temporelle des paquets dans le temps liée à l'évolution de la fréquence horloge.

On peut également remarquer que le noeud racine lors de l'enregistrement peut être différent de celui lors de la lecture. En conséquence, la synchronisation de l'horloge lors de l'étiquetage peut être faite sur une horloge maître différente de celle lors de la lecture de l'étiquette.

Cette dérive sur le débit et donc sur les instants d'arrivée des PCR sur lesquels se synchronise l'horloge locale 27 Mhz entraîne une dérive de cette horloge en fréquence. En conséquence, à plus ou moins long terme, un assèchement ou un débordement du buffer du décodeur MPEG apparaît se traduisant par un défaut de visualisation des images sur le récepteur, par exemple un gel d'image apparaît de manière récurrente.

Un décalage trop important de cette horloge synchronisée peut également détériorer la qualité des signaux chrominance extraits de la sous-porteuse.

Modifier la précision de 100 ppm d'un équipement ne permettrait pas de résoudre le problème car n'importe quel équipement peut être déclaré noeud racine lors de l'écriture puis lors de la lecture des données du disque dur.

Ainsi, si les données comprimées ne sont pas transmises directement à un décodeur mais sont enregistrées sur un support d'enregistrement, par exemple un disque dur, pour être, par la suite, lues, par l'intermédiaire d'un bus 1394, par le décodeur, des problèmes de dérive subsistent entraînant de manière récurrente et à plus ou moins brève échéance un défaut d'affichage des images .

Un mode de fonctionnement connu appelé "pull" dans lequel le débit de transfert de données du disque dur vers le décodeur peut être "commandé" par le décodeur, par exemple en fonction du taux de remplissage du tampon du décodeur permet d'éviter tout assèchement ou débordement de ce tampon. Dans ce mode, les problèmes de précision d'horloge sont moins cruciaux, une dérive trop importante de l'horloge du décodeur, du fait d'une dérive dans le débit, étant corrigée par une régulation du débit du flux en lecture, par le décodeur, en fonction du niveau de remplissage du buffer du décodeur. Ce mode de fonctionnement n'est cependant pas possible dans le cas d'un enregistrement de flux TS qui ne permet pas les accès directs mémoire (DMA) par le décodeur. Quant à l'enregistrement au niveau des paquets PES, il ne permet pas le transfert de ces données sur le bus 1394.

L'invention a pour but de pallier les inconvénients précités.

Elle a pour objet un procédé de lecture sur un support d'enregistrement de données audio et vidéo codées sous forme de paquets selon la norme MPEG, pour leur transmission à un décodeur par l'intermédiaire d'un bus, ces paquets ayant été préalablement enregistrés avec des étiquettes définissant, à partir d'une horloge d'étiquetage, des instants de réception du bus des paquets à enregistrer, caractérisé en ce qu'il comprend :
- une étape de lecture des étiquettes enregistrées avec les paquets,
- une étape de comparaison des étiquettes à des valeurs comptées à partir d'une horloge de transfert pour déterminer les instants de transfert sur le bus des données lues du support d'enregistrement,
la fréquence de fonctionnement de l'horloge de transfert étant telle que l'écart maximum entre les fréquences de l'horloge d'étiquetage et de l'horloge de transfert, additionné à la dérive maximum de l'horloge système MPEG, est, proportionnellement aux valeurs nominales, de l'ordre de ou inférieur à la dérive de l'horloge système spécifiée dans la norme.

Selon une variante, le procédé est caractérisé en ce que l'horloge d'étiquetage et horloge de transfert sont une même horloge et en ce que la fréquence de fonctionnement est telle que sa dérive maximum, additionnée à la dérive maximum de l'horloge système est, proportionnellement aux valeurs nominales, de l'ordre de ou inférieur à la dérive de l'horloge système spécifiée dans la norme divisée par deux.

L'invention a également pour objet un dispositif de lecture pour la mise en oeuvre du procédé comportant un support d'enregistrement et un circuit d'interface lecture pour la lecture et le transfert des données du support d'enregistrement vers un bus, caractérisé en ce qu'il comprend au moins une horloge de transfert pour le transfert des données lues, telle que l'écart maximum entre la fréquence de l'horloge d'étiquetage et la fréquence de l'horloge de transfert, additionné à la dérive maximum de l'horloge système MPEG est, proportionnellement aux valeurs nominales, de l'ordre de ou inférieur à la dérive de l'horloge système spécifiée dans la norme.

Selon une variante, le dispositif est caractérisé en ce que l'horloge d'étiquetage et l'horloge de transfert sont une même horloge et en ce que sa fréquence de fonctionnement est telle que sa dérive maximum, additionnée à la dérive maximum de l'horloge système est, proportionnellement aux valeurs nominales, de l'ordre de ou inférieure à la dérive de l'horloge système spécifiée dans la norme divisée par deux.

Grâce à l'estampillage des paquets mémorisés dans le support d'enregistrement à partir d'une horloge spécifique, les risques d'assèchement ou de débordement du buffer du décodeur sont réduits au minimum.

L'invention a pour principal avantage de permettre une parfaite compatibilité pour la mémorisation et transfert de signaux de type DV ou MPEG à travers un bus 1394.

Les caractéristiques et avantages de la présente invention ressortiront mieux de la description suivante, donnée à titre d'exemple et en référence aux figures annexées qui représentent :
- la figure 1, un récepteur relié à un dispositif d'enregistrement,
- la figure 2 un circuit interface écriture,
- la figure 3, un circuit interface lecture.

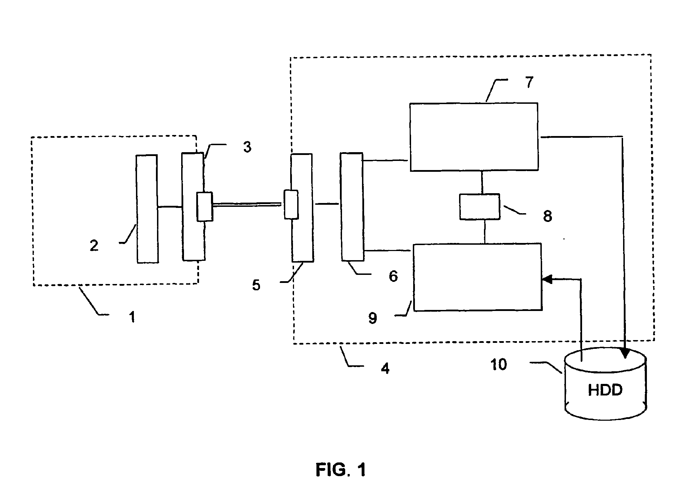

Une configuration d'un dispositif d'enregistrement sur un support d'enregistrement de données comprimées relié à un récepteur satellite à travers un bus 1394 est représentée à la figure 1. Un récepteur 1 équipé d'un circuit interface 1394 reçoit un train de données audio vidéo comprimées selon la norme MPEG 2 provenant d'une transmission par satellite, appelé train de transport TS dans la norme (acronyme de l'anglais Transport Stream). Le signal reçu par le récepteur est, entre autres, démodulé pour fournir un signal en bande de base. Ce flux de transport comporte plusieurs programmes. Il peut être transmis tel quel ou bien après filtrage ne sélectionnant que les paquets correspondant à un programme choisi.

Un circuit interface 1394 intégré au récepteur permet de transmettre ce flux de données sur la liaison 1394. Ce circuit est constitué, selon les appellations dans la norme, d'une couche "contrôle de liaison" (LINK) 2 et d'une couche interface physique (PHY) 3. Il permet, entre autres, de réaliser l'étiquetage des paquets selon la norme IEC 61883. Les données sont transmises par l'intermédiaire d'un port 1394. Le dispositif d'enregistrement 4 comporte un disque dur 10 et un circuit d'interface du disque dur 4 relié au bus 1394 et au disque dur.

Ce circuit d'interface 4 comprend un circuit PHY 5, un circuit LINK 6, un circuit d'interface écriture 7, un circuit d'interface lecture 9 et un circuit d'horloge 8.

Les données arrivent, par l'intermédiaire d'un port 1394, sur un circuit PHY 5 et un circuit LINK 6 conformes à la norme 1394. Elles sont transmises sur le port audio vidéo de sortie du circuit LINK aux instants correspondant à l'étiquetage des paquets. Le port audio vidéo est relié à l'entrée d'un circuit d'interface écriture 7 qui estampille les données conformément à l'invention. Le circuit d'interface disque dur 4 est relié à un disque dur 10. Il transmet les données estampillées au disque dur pour leur enregistrement.

Le disque dur 10 est relié à une entrée du circuit d'interface 4 pour la lecture des données. Un circuit d'interface lecture 9 vient lire les données sur cette entrée pour les transmettre au port audio vidéo d'entrée du circuit LINK 6. Ces données sont ensuite envoyées au bus 1394 via le circuit PHY 5 et le port 1394.

Une horloge 8 alimente chacun des circuits d'interface 7 et 9.

### Ecriture des données

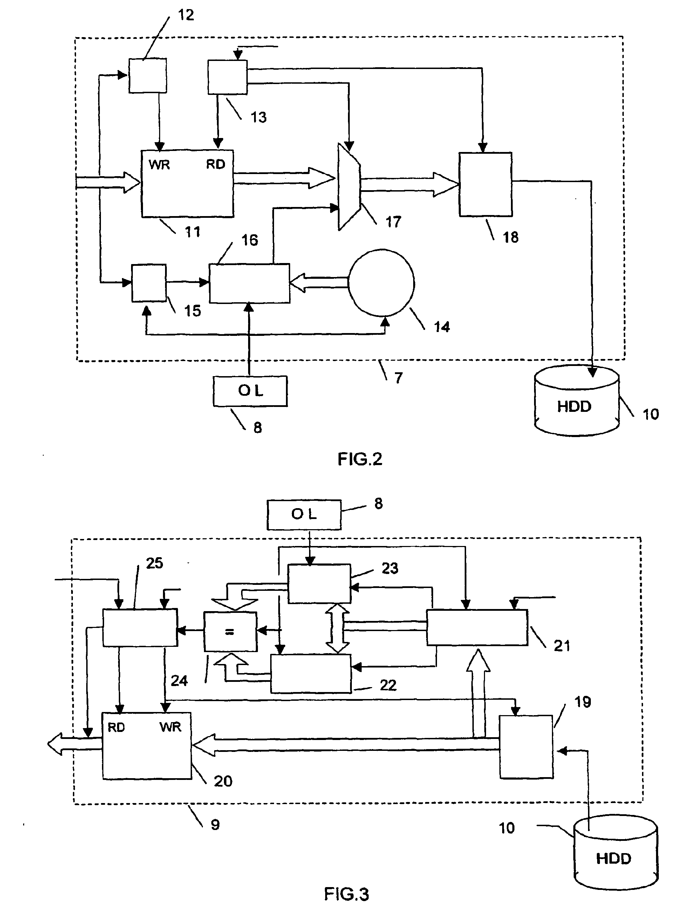

Le circuit d'interface écriture 7 est maintenant décrit plus en détail à l'aide de la figure 2.

Les données audio et vidéo accompagnées de signaux de validation, de début de paquet et d'une horloge de synchronisation 10 Mhz provenant du port de sortie audio vidéo du circuit LINK 6 sont présentes à l'entrée du circuit d'interface écriture 7. Les données sont mémorisées dans une mémoire paquets 11. Le signal d'horloge incrémente un compteur d'écriture 12 qui commande l'écriture dans la mémoire paquets 11. Le signal de début de paquet permet la remise à zéro de ce compteur 12. Un compteur de lecture 13 commande la lecture de la mémoire paquets 11, synchronise un multiplexeur 17 et contrôle l'écriture dans une mémoire tampon 18 pour la transmission et l'enregistrement des données. Ce compteur 13 reçoit sur une entrée une information sur la longueur des paquets, à savoir 188 octets dans le cas de données de type MPEG 2, 131 octets dans le cas de données de type DSS et 480 octets dans le cas de données de type DV.

La mémoire paquets a pour rôle de s'assurer que les données reçues sont des paquets entiers et, dans la négative, de transmettre des paquets à la bonne longueur, en rajoutant des bits de bourrage.

L'estampillage des données selon l'invention se fait à partir d'une horloge spécifique qui est un oscillateur haute fréquence 8, par exemple à la fréquence de 40 Mhz et dont les conditions de stabilité dans le temps sont spécifiées entre 1 ppm et 15 ppm comme il sera expliqué plus loin. Cet oscillateur est relié à l'entrée horloge d'un compteur 14. Il est également relié à un circuit de détection de début de paquet 15 et un registre de capture 16 du marqueur temporel, pour la synchronisation de ces circuits. Le compteur 14 est rythmé par l'horloge 8 et transmet les mots de comptage au registre 16. Lorsque le signal début de paquet, qui est transmis au circuit de détection de début de paquet 15, est reçu, ce circuit transmet un signal de validation, synchronisé sur l'horloge 8, au registre 16 qui mémorise la sortie compteur à cet instant. Le circuit de détection 15 permet de retrouver le début d'un paquet dans le cas où ce signal n'est pas transmis par ailleurs et de l'échantillonner pour le rendre synchrone de l'horloge haute fréquence 8. La valeur mémorisée par le registre 16 est transmise à un multiplexeur 17 qui reçoit également les données en sortie de la mémoire paquets 11. Le compteur de lecture 13 commande le multiplexeur qui transmet en sa sortie, d'abord l'étiquette correspondant à l'instant d'arrivée du début de paquet dans la mémoire paquet puis les données de ce paquet mémorisé. Ces données traversent une mémoire tampon enregistrement 18 avant d'être transmises sur la sortie de l'interface 7 pour leur mémorisation, sous forme de fichier audio vidéo, par le disque dur 10 relié à cette sortie.

### Lecture des données

Le circuit d'interface 9 est maintenant décrit plus en détail à l'aide de la figure 3.

Le disque dur 10 est relié à une entrée du circuit d'interface lecture 9 pour fournir les données enregistrées. Ces données en entrée de ce circuit transitent par une mémoire tampon de lecture 19 pour être transmises vers une mémoire paquets 20 et un circuit d'extraction d'étiquette 21. Les données audio vidéo provenant du disque dur sont enregistrées dans la mémoire paquets 20 alors que les données d'étiquetage sont extraites pour être mémorisées par le circuit d'extraction d'étiquette 21. Ces données d'étiquetage sont celles ajoutées aux données audio vidéo par le circuit 7, pour chaque paquet, comme indiqué précédemment. L'information relative à la longueur d'un paquet est transmise au circuit d'extraction 21, l'étiquette à extraire étant reçue à la cadence paquets.

Le circuit d'extraction 21 transmet les étiquettes à un compteur de restitution 23 et à un registre de mémorisation de l'étiquette temporelle 22, en synchronisation avec l'horloge 8 reçue par le circuit. Il transmet également un signal de commande de chargement au compteur de restitution à l'ouverture du fichier, ce compteur chargeant alors la première étiquette temporelle lue lors de l'ouverture du fichier pour s'initialiser. Il transmet aussi un signal de prise en compte des données au registre de mémorisation 22, lors de l'envoi d'une étiquette temporelle extraite. L'étiquette est alors chargée par le registre en synchronisation avec le signal d'horloge 8 également reçu par ce registre.

L'entrée horloge du compteur 23 reçoit les signaux de l'horloge 8. La sortie du compteur 23 est transmise à un comparateur 24 qui reçoit sur une deuxième entrée, provenant du registre de mémorisation 22, l'étiquette temporelle du paquet qui est en cours de mémorisation dans la mémoire paquets 20. A l'égalité, et synchronisé sur le signal d'horloge 8 reçu par le circuit, un signal de commande de lecture est transmis par le comparateur 24 à un compteur paquets 25. A la réception de ce signal, le compteur déclenche la lecture d'un nombre d'octets correspondant à un paquet. Ce compteur paquet reçoit l'information relative à la longueur d'un paquet. Pendant la lecture des données de la mémoire paquets 20, le compteur 25 actionne la lecture d'un nouveau paquet de la mémoire tampon de lecture 19 et l'écriture de ce paquet dans la mémoire paquets 20. L'entrée horloge du compteur paquet est alimentée par le signal d'horloge audio vidéo provenant de l'interface LINK 6 afin de synchroniser la transmission des données. Les données audio vidéo provenant de la mémoire paquets 20 ainsi que les signaux d'horloge, de début de paquet et données valides correspondants provenant du compteur de paquets 25 sont fournies en sortie du circuit d'interface 9.

Ainsi, le compteur de restitution 23 est initialisé avec l'étiquette du premier paquet lu dans le fichier du disque dur. Dans la phase transitoire, le premier paquet est mémorisé dans la mémoire paquet et lu immédiatement, donc transmis immédiatement vers le port d'entrée audio vidéo du circuit LINK 6. Après la mémorisation suivie de la transmission immédiate du premier paquet, l'étiquette du deuxième paquet est extraite et chargée dans le registre 22 pendant que le deuxième paquet est mémorisé dans la mémoire paquet. Le compteur 23 tourne à la fréquence de l'horloge de précision 8 et lorsque la valeur de comptage est égale à la valeur de la deuxième étiquette, le comparateur 24 transmet un signal de déclenchement du compteur paquets 25 pour la lecture et la transmission au port d'entrée audio vidéo du circuit LINK 6 du nombre d'octets correspondant à un paquet. Et ainsi de suite à chaque lecture d'un nouveau paquet.

Les horloges de synchronisation des compteurs paquets sont transmises par le port audio vidéo du circuit LINK. Elles pourraient tout aussi bien être construites à partir de l'oscillateur haute fréquence 40 Mhz, le signal étant par exemple divisé par 4 pour fournir une horloge 10 Mhz alimentant ces compteurs.

L'exemple décrit l'utilisation d'une même horloge 8 par le circuit d'interface écriture et le circuit d'interface lecture pour l'étiquetage des données lors de leur enregistrement et le transfert des données lues sur le bus 1394. II serait tout aussi envisageable de concevoir la mise en oeuvre des circuits à partir de deux horloges (oscillateurs) séparées, une horloge d'étiquetage et une horloge de transfert. Il faut alors tenir compte de contraintes supplémentaires sur ces horloges. En effet, lors de l'exploitation d'une horloge commune, seule une très bonne stabilité de la fréquence est requise, stabilité dans le temps, en température... Mais une bonne précision n'est pas indispensable puisqu'il s'agit d'une datation relative d'un paquet par rapport à un autre. Dans le cas où deux horloges indépendantes sont utilisées, une pour l'étiquetage et une pour le transfert, cette datation relative dépend également de l'écart de fréquence entre les deux horloges. En conséquence, la précision des horloges par rapport à leur valeur nominale doit également être spécifiée. La fréquence de la deuxième horloge doit par exemple être garantie à l'intérieur de la fourchette dans laquelle peut évoluer la fréquence de l'horloge pour l'étiquetage. On peut également spécifier des fréquences nominales très précises pour chacune des horloges, par exemple à 1ppm près et des dérives de 15ppm maximum pour chacune d'entre elles.

Cette spécification de l'horloge en dérive de 15 ppm maximum, donne un écart maximum de 30ppm entre l'enregistrement et la lecture, en négligeant les écarts entre les fréquences nominales dans le cas où deux horloges sont utilisées. Si cependant il est envisagé plusieurs stockages successifs des données, une meilleure précision est requise, l'erreur pouvant s'accumuler à chaque estampillage donc à chaque enregistrement. Par exemple une précision de l'ordre de 1ppm permet alors une quinzaine d'enregistrements successifs.

Les fréquences de fonctionnement des horloges d'étiquetage (aussi appelées d'enregistrement) et de transfert sont telles que l'écart maximum entre ces fréquences, proportionnellement parlant, soit voisin de la tolérance sur l'horloge système, spécifiée à ± 30ppm dans la norme MPEG2. On supposait donc précédemment que la fréquence de l'horloge système a une dérive maximum de ± 1 ppm, permettant une dérive de ± 30ppm sur le débit moyen en entrée du décodeur (lecture du PCR) correspondant à une dérive de ±15 ppm maximum pour les horloges d'étiquetage et de transfert.

Dans le cas où l'on souhaite une compatibilité avec tout type de codeur et donc en supposant une dérive maximum de l'horloge système de ± 30ppm, les fréquences des horloges d'étiquetage et de transfert ne doivent pas s'écarter de beaucoup plus que 1 ppm. Il s'agit bien sûr de valeurs indicatives et le fonctionnement sera d'autant meilleur que l'on se rapprochera de ces valeurs.

En d'autres termes, les fréquences de fonctionnement des horloges d'étiquetage et de transfert sont telles que l'écart maximum entre ces fréquences, additionné à la dérive maximum de horloge système, est de l'ordre de ou inférieur, proportionnellement aux valeurs nominales, à la dérive de l'horloge système spécifiée dans la norme.

Le flux de données transitant sur le bus 1394 est par exemple un flux de transport MPTS (Multiple Program Transport Stream) comportant plusieurs programmes, tel que défini dans la norme MPEG 2. L'ensemble des programmes transportés peut alors être enregistré dans le disque dur. Il peut également s'agir d'un flux de transport SPTS (Single Program Transport Stream) obtenu par filtrage du flux MPTS dans le décodeur MPEG 2 aussi appelé flux "parsé". Les paquets de 188 octets sont alors reçus de manière irrégulière à l'entrée de l'interface 1394 et l'on raisonne alors en terme de débit moyen. C'est ce seul programme qui est enregistré dans le disque dur.

La figure 1 décrit une liaison 1394 entre un récepteur et un dispositif d'enregistrement. Ce dernier pourrait tout aussi bien, sans sortir du domaine de l'invention, être intégré au récepteur, les données TS étant alors transmises directement au circuit d'interface disque dur, sans transiter par un bus 1394 et donc sans traverser les circuits LINK et PHY pour leur enregistrement.

Les signaux DV ne nécessitent pas une telle précision au niveau du décodage. Simplement le dispositif mis en oeuvre pour les signaux de type MPEG peut également être utilisé pour l'étiquetage des paquets DV pour leur enregistrement et lecture du support d'enregistrement.

## Revendications

1. Procédé de lecture sur un support d'enregistrement de données audio et vidéo codées sous forme de paquets selon la norme MPEG, pour leur transmission à un décodeur par l'intermédiaire d'un bus, ces paquets ayant été préalablement enregistrés avec des étiquettes définissant, à partir d'une horloge d'étiquetage (8), des instants de réception du bus des paquets à enregistrer, **caractérisé.en ce qu'**il comprend :
- une étape de lecture des étiquettes enregistrées avec les paquets,
- une étape de comparaison des étiquettes à des valeurs comptées (9) à partir d'une horloge de transfert (8) pour déterminer les instants de transfert sur le bus des données lues du support d'enregistrement,
la fréquence de fonctionnement de l'horloge de transfert étant telle que l'écart maximum entre les fréquences de l'horloge d'étiquetage et de l'horloge de transfert, additionné à la dérive maximum de l'horloge système MPEG, est, proportionnellement aux valeurs nominales, de l'ordre de ou inférieur à la dérive de l'horloge système spécifiée dans la norme.

2. Procédé selon la revendication 1, **caractérisé en ce que** l'horloge d'étiquetage et l'horloge de transfert sont une même horloge (8) et **en ce que** la fréquence de fonctionnement est telle que sa dérive maximum, additionnée à la dérive maximum de l'horloge système est, proportionnellement aux valeurs nominales, de l'ordre de ou inférieure à la dérive de l'horloge système spécifiée dans la norme divisée par deux.

3. Procédé selon la revendication 1, **caractérisé en ce que** l'horloge système a une tolérance voisine de ± 1 ppm, la fréquence nominale de l'horloge d'étiquetage et de transfert (8) une tolérance voisine de ± 1 ppm et **en ce que** la dérive de chaque horloge se trouve dans une fourchette de ± 15ppm.

4. Procédé selon la revendication 2, **caractérisé en ce que** l'horloge système a une tolérance voisine de 1 ppm, et **en ce que** la dérive de l'horloge d'étiquetage et de transfert (8) se trouve dans une fourchette de ± 15ppm.

5. Procédé selon la revendication 1 ou 2, **caractérisé en ce que** les données à enregistrer proviennent d'un bus 1394.

6. Procédé selon la revendication 1 ou 2, **caractérisé en ce que** les données à enregistrer correspondent au flux TS provenant directement du récepteur (1) sans transiter sur un bus 1394.

7. Procédé selon la revendication 1, **caractérisé en ce que** les données lues sont également des données de type DV et/ou DSS.

8. Procédé selon la revendication 3 ou 4, **caractérisé en ce que** la dérive est voisine de 1 ppm pour permettre des opérations d'enregistrement /lecture successives.

9. Dispositif de lecture pour la mise en oeuvre du procédé selon la revendication 1 comportant un support d'enregistrement (10) et un circuit d'interface lecture (9) pour la lecture et le transfert des données du support d'enregistrement vers un bus, **caractérisé en ce qu'**il comprend au moins une horloge de transfert (8) pour le transfert des données lues, telle que l'écart maximum entre la fréquence de l'horloge d'étiquetage et la fréquence de l'horloge de transfert, additionné à la dérive maximum de l'horloge système MPEG, est, proportionnellement aux valeurs nominales, de l'ordre de ou inférieur à la dérive de l'horloge système spécifiée dans la norme.

10. Dispositif selon la revendication 9, **caractérisé en ce que** l'horloge ayant servi à l'étiquetage et l'horloge de transfert (8) sont une même horloge et **en ce que** sa fréquence de fonctionnement est telle que sa dérive maximum, additionnée à la dérive maximum de l'horloge système MPEG, est, proportionnellement aux valeurs nominales, de l'ordre de ou inférieure à la dérive de l'horloge système spécifiée dans la norme divisée par deux.

## Claims

1. Process for reading from a record carrier audio and video data coded in the form of packets according to the MPEG standard, for their transmission to a decoder by way of a bus, these packets having previously been recorded together with tags defining, on the basis of a tagging clock (8), instants of reception from the bus of the packets to be recorded, **characterized in that** it comprises:
- a step of reading the tags recorded together with the packets,
- a step of comparing the tags with values counted (9) on the basis of a transfer clock (8) for determining the instants of transfer on the bus of the data read from the record carrier,
the frequency of operation of the transfer clock being such that the maximum deviation between the frequencies of the tagging clock and of the transfer clock, added to the maximum drift of the MPEG system clock, is, in proportion to the nominal values, of the order of or less than the drift of the system clock specified in the standard.

2. Process according to Claim 1, **characterized in that** the tagging clock and the transfer clock are one and the same clock (8) and **in that** the frequency of operation is such that its maximum drift, added to the maximum drift of the system clock is, in proportion to the nominal values, of the order of or less than the drift of the system clock specified in the standard divided by two.

3. Process according to Claim 1, **characterized in that** the system clock has a tolerance of around ± 1 ppm, the nominal frequency of the tagging and transfer clock (8) a tolerance of around ± 1 ppm and **in that** the drift of each clock lies in a range of ± 15 ppm.

4. Process according to Claim 2, **characterized in that** the system clock has a tolerance of around 1 ppm, and **in that** the drift of the tagging and transfer clock (8) lies in a range of ± 15 ppm.

5. Process according to Claim 1 or 2, **characterized in that** the data to be recorded originate from a 1394 bus.

6. Process according to Claim 1 or 2, **characterized in that** the data to be recorded correspond to the TS stream originating directly from the receiver (1) without travelling over a 1394 bus.

7. Process according to Claim 1, **characterized in that** the data read are also data of DV and/or DSS type.

8. Process according to Claim 3 or 4, **characterized in that** the drift is around 1 ppm so as to allow successive recording/reading operations.

9. Reading device for the implementation of the process according to Claim 1 comprising a record carrier (10) and a reading interface circuit (9) for the reading and the transferring of the data from the record carrier to a bus, **characterized in that** it comprises at least one transfer clock (8) for transferring the data read, such that the maximum deviation between the frequency of the tagging clock and the frequency of the transfer clock, added to the maximum drift of the MPEG system clock, is, in proportion to the nominal values, of the order of or less than the drift of the system clock specified in the standard.

10. Device according to Claim 9, **characterized in that** the clock having served for the tagging and the transfer clock (8) are one and the same clock and **in that** its frequency of operation is such that its maximum drift, added to the maximum drift of the system clock MPEG is, in proportion to the nominal values, of the order of or less than the drift of the system clock specified in the standard divided by two.

## Patentansprüche

1. Verfahren zum Lesen von Audio- und Videodaten auf einem Aufzeichnungsträger, die in der Form von Paketen gemäß dem MPEG-Standard kodiert wurden, zu deren Übertragung an einen Dekoder über einen Bus, wobei diese Pakete vorher mit Tags aufgezeichnet wurden, die auf Basis eines Tagging-Takts (8) Zeitpunkte des Empfangs von aufzuzeichnenden Paketen von dem Bus definieren, **dadurch gekennzeichnet, dass** das Verfahren Folgendes umfasst:
- einen Schritt des Lesens von mit den Paketen aufgezeichneten Tags,
- einen Schritt des Vergleichens von Etiketten mit Werten (9), die auf Basis eines Übertragungstakts (8) gezählt wurden, um die Zeitpunkte der Übertragung der von dem Aufzeichnungsträger gelesenen Daten an den Bus zu bestimmen,
- wobei die Betriebsfrequenz des Übertragungstaktgebers derart ist, dass der maximale Unterschied zwischen den Frequenzen des Tagging-Takts und des Übertragungstakts, zu der maximalen Abweichung des MPEG-Systemtakts addiert, proportional zu den Sollwerten in der Größenordnung von oder kleiner als die Abweichung des in dem Standard angegebenen Systemtakts ist.

2. Verfahren nach Anspruch 1, **dadurch gekennzeichnet, dass** der Tagging-Takt und der Übertragungstakt ein und derselbe Takt (8) sind und dass die Betriebsfrequenz derart ist, dass ihre maximale Abweichung, zu der maximalen Abweichung des Systemtakts addiert, proportional zu den Sollwerten in der Größenordnung von oder kleiner als die Abweichung des in dem Standard angegebenen Systemtakts, dividiert durch zwei, ist.

3. Verfahren nach Anspruch 1, **dadurch gekennzeichnet, dass** der Systemtakt eine Toleranz von etwa ± 1 ppm aufweist, die Sollfrequenz des Tagging- und Übertragungstakts (8) eine Toleranz von etwa ± 1 ppm aufweist und dass die Abweichung jedes Taktes in einem Bereich von ± 15 ppm liegt.

4. Verfahren nach Anspruch 2, **dadurch gekennzeichnet, dass** der Systemtakt eine Toleranz von etwa ± 1 ppm aufweist und dass die Abweichung des Tagging- und Übertragungstakts (8) in einem Bereich von ± 15 ppm liegt.

5. Verfahren nach Anspruch 1 oder 2, **dadurch gekennzeichnet, dass** die aufzuzeichnenden Daten von einem 1394-Bus kommen.

6. Verfahren nach Anspruch 1 oder 2, **dadurch gekennzeichnet, dass** die aufzuzeichnenden Daten einem TS-Strom entsprechen, der direkt von dem Empfänger (1) kommt, ohne einen 1394-Bus zu durchqueren.

7. Verfahren nach Anspruch 1, **dadurch gekennzeichnet, dass** die gelesenen Daten außerdem Daten des DV- und/oder DSS-Typs sind.

8. Verfahren nach Anspruch 3 oder 4, **dadurch gekennzeichnet, dass** die Abweichung etwa 1 ppm ausmacht, um aufeinander folgende Aufzeichnungs-/Leseoperationen zu ermöglichen.

9. Lesevorrichtung zum Durchführen des Verfahrens nach Anspruch 1, die einen Aufzeichnungsträger (10) und eine Leseschnittstellenschaltung (9) zum Lesen und Übertragen von Daten von dem Aufzeichnungsträger an einen Bus umfasst, **dadurch gekennzeichnet, dass** sie mindestens einen Übertragungstakt (8) zum Übertragen von gelesenen Daten umfasst, so dass der maximale Unterschied zwischen der Frequenz des Tagging-Takts und der Frequenz des Übertragungstakts, zu der maximalen Abweichung des MPEG-Systemtakts addiert, proportional zu den Sollwerten in der Größenordnung von oder kleiner als die Abweichung des in dem Standard angegebenen Systemtakts ist.

10. Vorrichtung nach Anspruch 9, **dadurch gekennzeichnet, dass** der Takt, der zum Tagging dient, und der Übertragungstakt (8) ein und derselbe Takt sind und dass seine Betriebsfrequenz derart ist, dass ihre maximale Abweichung, zu der maximalen Abweichung des MPEG-Systemtakts addiert, proportional zu den Sollwerten in der Größenordnung von oder kleiner als die Abweichung des in dem Standard angegebenen Systemtakts, dividiert durch zwei, ist.
